# EUROPEAN PATENT SPECIFICATION

(11) **EP 1 003 170 B1**
(45) Date of publication and mention of the grant of the patent: **01.09.2004**
(21) Application number: 99309143.8
(22) Date of filing: 17.11.1999
(51) Int. Cl.: G11B 20/14

(54) **Data detecting apparatus using sample interpolation and method therefor**
Gerät zur Datendetektion mit Dateninterpolation und entsprechendes Verfahren
Appareil pour la détection de données, utilisant l' interpolation des données échantillonées

(30) Priority: 18.11.1998 KR 9849492
(43) Date of publication of application: 24.05.2000
(73) Proprietor: SAMSUNG ELECTRONICS CO., LTD., Suwon-city, Kyungki-do 441-373 (KR)
(72) Inventor: Hwang, In-suk, Kongju-city, Chungcheongnam-do (KR); Hwang, Chan-soo, Yongin-city, Kyungki-do (KR); Lee, Yong-hoon, Taejeon-city (KR); Ko, Jung-wan, Yongin-city, Kyungki-do (KR)
(74) Representative: Chugg, David John

(56) References cited:
- K.A. SCHOUHAMER IMMINK: "EFM Coding: Squeezing the last bits" IEEE TRANSACTIONS ON CONSUMER ELECTRONICS, vol. 43, no. 3, August 1997 (1997-08), pages 491-495, XP000742522 New York, US

## Description

The present invention relates to data detection, and more particularly, to an apparatus for detecting run-length limited (RLL) coded data at half the speed of a reproduction speed, and estimating data having a high reproduction speed using sample interpolation to be used in restoring an original signal.

In a 4.7 giga byte (Gbyte) digital versatile disk read only memory (DVD-ROM) system, which is a type of commercialized DVD system, most of the energy of the power spectrum of a reproduction signal is concentrated in a lower frequency spectral domain in which data is reproduced at a speed of less than or equal to 1/4 reproduction speed.

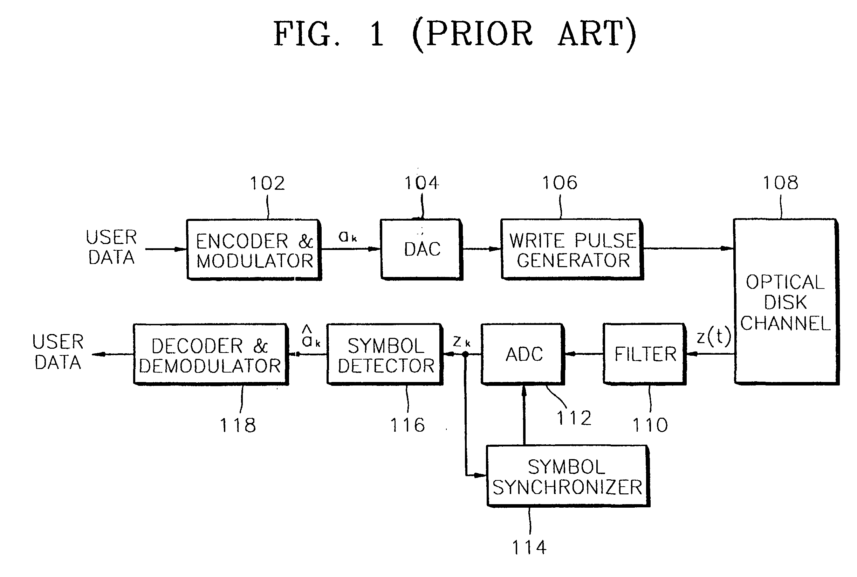

Referring to Figure 1 showing a general DVD system, an encoder and modulator 102 error-correction-code (ECC) encodes user data and modulates the ECC coded data using a predetermined modulation scheme, for example, 8-to-16 modulation and supplies RLL coded data ak. A digital-to-analog converter (DAC) 104 converts the RLL coded data output from the encoder and modulator 102 into analog data.

In a DVD system using optical power of a laser diode for recording, it is necessary to optimally adjust write power to be adaptive to a recording medium in order to optimize a recording domain. To this end, a write pulse generator 106 generates a write pulse corresponding to the output of the DAC 104. Binary data corresponding to the generated write pulse is recorded on a disk through an optical disk channel 108.

A sequence of channel bits {aₖ} stored in the disk are detected using a signal z(t) obtained during reproduction of the disk. In order to ensure the performance and signal margin of a detector, a digital signal processing algorithm such as PRML (Partial Response Maximum Likelihood) technique is employed. In other words, the reproduction signal z(t) reproduced from the disk through the optical disk channel 108 passes through a filter 110 having a bandwidth of 1/2T where T is a symbol period. This is because the reproduction signal, that is, the RLL coded data, is concentrated in the low-frequency spectral domain.

An analog-to-digital converter (ADC) 112 converts the reproduction signal z(t) having passed through the filter 110 into a digital signal in synchronization with a symbol clock signal, which has a symbol period of T and is supplied from a symbol synchronizer 114, for feeding-back and receiving the output of the ADC 112 to derive a sequence of digital samples {zₖ}. A symbol detector 116 Viterbi decodes the digital samples using a maximum likelihood decoding algorithm to restore a sequence of channel bits âₖ recorded on the disk. A decoder and demodulator 118 16-to-8 demodulates the restored sequence of channel bits {âₖ} supplied from the symbol detector 116 and ECC decodes the demodulated data to provide final user data.

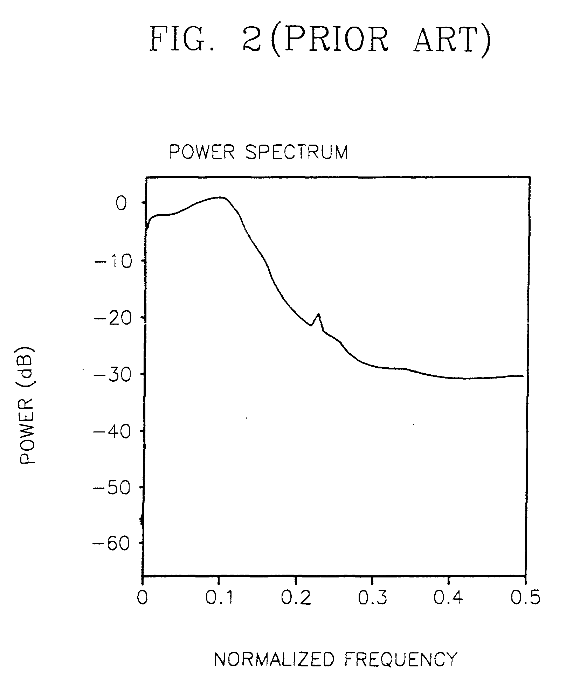

In the 4.7 Gbyte DVD-ROM system shown in Figure 1, the power spectrum of the reproduction signal z(t) obtained from the optical disk channel 108 shows that most of the signal power spectrum for a maxentropic source is concentrated in the low frequency spectral domain where the signal is reproduced at a speed of less than or equal to 1/4 the reproduction speed, as shown in Figure 2. Thus, even if analog-to-digital (A/D) conversion is done at half the speed of the reproduction speed, rather than at the reproduction speed, that is,1/T, a loss caused by A/D conversion is negligible.

However, existing DVD systems or digital receivers are not based on such characteristic and perform A/D conversion at the same speed as the reproduction speed to detect data. Therefore, for a given maximum operation speed of an ADC, the data reproduction speed of a conventional detector is limited to the maximum sampling speed for A/D conversion.

J.Vesma et al. "Interpolation filters with arbitrary frequency response for all-digital receivers", IEEE International Symposium on Circuits and Systems, 12.05.1996, PP. 568-571 XP2126108 discloses the use of timing adjustment through interpolation to synchronise sampling of a received signal to incoming data symbols.

With a view to solve or reduce the above problem, it is an aim of embodiments of the present invention to provide a data detecting apparatus capable of reproducing data at a high speed, without being limited to a sampling speed for analog-to-digital (A/D) conversion.

It is another aim of embodiments of the present invention to provide a data detecting apparatus for sampling a reproduction signal at a speed corresponding to half the speed of a data reproduction speed, detecting data having the same speed of reproduction speed using sample interpolation and restoring an original signal using the detected data.

It is still another aim of embodiments of the present invention to provide a data detecting method by which high-speed data reproduction is allowed, the data reproduction speed not being limited to a sampling speed for analog-to-digital (A/D) conversion.

It is yet another aim of embodiments of the present invention to provide a data detecting method for sampling a reproduction signal at a speed corresponding to half the speed of a data reproduction speed, detecting data having the same speed of the reproduction speed using sample interpolation and restoring an original signal using the detected data.

According to a first aspect of the invention there is provided an apparatus as defined in claim 1.

Preferably, the sampler is an analog-to-digital converter (ADC) for sampling the RLL coded data.

The estimator may be a digital interpolation filter, the digital interpolation filter comprising: an interpolator for interpolating 0's between the sampled data; and a filter having a bandwidth of 1/4T with respect to the symbol period of T, the filter for low-pass filtering the output of the interpolator.

The apparatus may further comprise: a symbol detector for restoring an original signal using a maximum likelihood decoding algorithm from the estimated samples; and wherein the analog filter having a bandwidth of 1/4T with respect to the symbol period of T.

The apparatus may form part of a digital versatile disk (DVD) system.

The apparatus may form part of a receiver for receiving RLL coded data.

According to another aspect of the invention, there is provided a method for detecting run-length limited (RLL) coded data using an apparatus according to the first aspect of the invention, the method comprising steps of: (a) sampling received RLL coded data according to a sampling clock signal at speed of half a reproduction speed to provide sampled data; (b) estimating sampled values having the reproduction speed with the sampled data using sample interpolation; and (c) feeding back the estimated sampled values to provide the sampling clock signal having double period of a symbol period.

Step (b) may comprise the sub-steps of: (b1) interpolating 0's between the sampled data to provide interpolated data having the reproduction speed; and (b2) low-pass filtering the interpolated data with a bandwidth of 1/4T with respect to the symbol period of T.

The method may include the steps of: (c) low-pass filtering the received RLL coded data with a bandwidth of 1/4T with respect to the symbol period; and (d) restoring an original signal using a maximum likelihood decoding algorithm from the estimated samples.

For a better understanding of the invention, and to show how embodiments of the same may be carried into effect, reference will now be made, by way of example, to the accompanying diagrammatic drawings in which:
Figure 1 is a block diagram of a general DVD system;
Figure 2 shows the power spectrum of a maxentropic reproduction signal; and
Figure 3 is a circuit diagram of a data detecting apparatus according to a preferred embodiment of the present invention.

A preferred embodiment of the data detecting apparatus and method using sample interpolation according to the present invention will now be described with reference to the accompanying drawing.

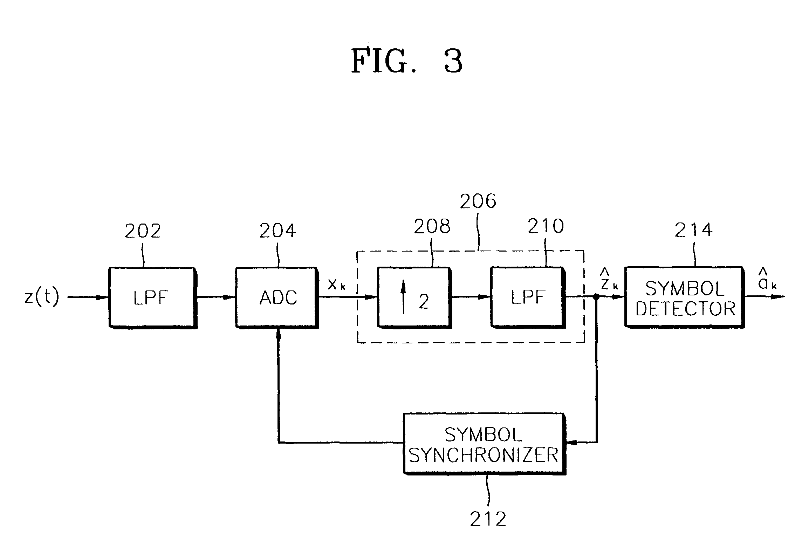

The data detecting apparatus proposed in the present invention includes an analog low pass filter 202, an ADC 204, a digital interpolation filter 206, a symbol synchronizer 212 and a symbol detector 214, as shown in Figure 3. First, an analog reproduction signal z(t) reproduced from a disk is made to pass through an analog filter having a bandwidth of 1/4T with respect to a symbol period, specifically, the analog low pass filter 202. Here, it is possible to use an analog low pass filter having a bandwidth of 1/4T because most of the energy of the power spectrum of the reproduction signal of RLL coded data is concentrated in a low frequency spectral domain less than 1/4 the reproduction speed, as shown in Figure 2.

The ADC 204 samples the reproduction signal z(t) having passed through the analog low pass filter 202 in accordance with a symbol clock signal, which has a period of 2T and is generated in the symbol synchronizer 212 in synchronization with the output of the digital interpolation filter 206, to produce a sequence of sampled symbols {xₖ}. An interpolator 208 of the digital interpolation filter 206 interpolates 0's between the sequence of symbols {xₖ}, which are sampled in a period of 2T and supplied from the ADC 204, and then the output of the interpolator 208 is made to pass through a digital filter having a bandwidth of 1/4T, specifically a digital low passfilter 210 to produce a sequence of estimated samples {*ẑ*_{*k*}} having a speed of 1/T. The estimated sequence of samples {*ẑ*_{*k*}} of {zₖ} derived through sampling at a speed of 1/T is obtained using interpolation. The digital interpolation filter 206 can be designed using a Parks-McClellan Algorithm or Least Square Algorithm disclosed in a publication by Andrea Antoniou, entitled "Digital Filters," Analysis, Design and Applications, McGraw-Hill, 1993.

The thus-obtained sequence of estimated samples having {*ẑ*_{*k*}}
a speed of 1/T is supplied to the symbol detector 214. Then, the symbol detector 214 restores a sequence of channel bits {âₖ} stored in the disk using a maximum likelihood decoding algorithm. The data detecting apparatus according to the embodiments of present invention is the same as the conventional one except that the bandwidth of the analog low pass filter 203 is 1/4T, which corresponds to a half that of the conventional analog low pass filter, the digital interpolation filter 206 is further provided and a symbol synchronizing loop is encountered with a slight delay of time.

According to the teachings of the present invention, since data is reproduced at double the speed of the conventional reproduction speed using a conventional ADC, the present invention can be advantageously applied for implementation of a high-speed digital receiver. In particular, in a high-density DVD system, since most of the energy of a reproduction signal is concentrated in a low frequency spectral domain less than or equal to 1/4T, the data detecting apparatus according to the present invention is useful for such high-density DVD systems. The present invention can also be applied to digital receivers for receiving RLL coded data and detecting the same in addition to DVD systems.

As described above, according to the present invention, an RLL coded reproduction signal is sampled at half the speed of the data reproduction speed, samples having the data reproduction speed are estimated using interpolation with respect to the samples reduced to a half, and the data recorded on a recording medium is restored from the estimated samples. Thus, since data can be reproduced at double the speed of the conventional reproduction speed, the present invention is useful for high-speed data reproduction.

## Claims

1. An apparatus for detecting run-length limited (RLL) coded data comprising:
an analogue filter (202) having a maximum bandwidth of 1/2 T with respect to the symbol period of T and being arranged to low-pass filter received RLL data;
a sampler that samples the received RLL coded data according to a sampling clock signal; and
an estimator that estimates sampled values having the symbol period with the sampled data using sample interpolation and a symbol synchronizer (2, 2) for feeding back and providing the output of the estimator to provide said sampling clock signal having double period of a symbol period to the sampler.

2. The apparatus according to claim 1, wherein the sampler is an analog-to-digital converter (ADC) (204) for sampling the RLL coded data.

3. The apparatus according to claim 1 or 2, wherein the estimator is a digital interpolation filter (206), the digital interpolation filter comprising:
an interpolator (208) for interpolating 0's between the sampled data; and
a filter (210) having a bandwidth of 1/4T with respect to the symbol period of T, the filter for low-pass filtering the output of the interpolator (208).

4. The apparatus according to claim 1, 2 or 3 further comprising:
a symbol detector (214) for restoring an original signal using a maximum likelihood decoding algorithm from the estimated samples; and
wherein the analog filter (202) has a bandwidth of 1/4T with respect to the symbol period of T.

5. The apparatus according any preceding claim, wherein the apparatus forms part of a digital versatile disk (DVD) system.

6. The apparatus according to any preceding claim, wherein the apparatus forms part of a receiver for receiving RLL coded data.

7. A method for detecting run-length limited (RLL) coded data using an apparatus as described in claim 1, the method comprising steps of:
(a) sampling received RLL coded data according to a sampling clock signal having double period of a symbol period to provide sampled data;
(b) estimating sampled values having the symbol period with the sampled data using sample interpolation; and
(c) feeding back the estimated sampled values to provide the sampling clock signal having double period of a symbol period.

8. The method according to claim 7, wherein the step (b) comprises the sub-steps of:
(b1) interpolating 0's between the sampled data to provide interpolated data having the reproduction speed; and
(b2) low-pass filtering the interpolated data with a bandwidth of 1/4T with respect to the symbol period of T.

9. The method according to claim 7 or 8 further comprising the steps of:
(c) low-pass filtering the received RLL coded data with a bandwidth of 1/4T with respect to the symbol period; and
(d) restoring an original signal using a maximum likelihood decoding algorithm from the estimated samples.

## Patentansprüche

1. Vorrichtung zum Erkennen von lauflängenbegrenzt codierten Daten, umfassend:
- ein Analogfilter (202), das eine maximale Bandbreite von ½ T im Bezug auf die Symbolperiode von T aufweist und zum Tiefpassfiltern von empfangenen lauflängenbegrenzten Daten eingerichtet ist;
- einen Abtaster, der die empfangenen lauflängenbegrenzt codierten Daten nach einem Abtasttaktsignal abtastet; und
- eine Schätzvorrichtung, die abgetastete Werte mit der Symbolperiode mit den abgetasteten Daten schätzt, wobei Abtastinterpolation und eine Symbolsynchronisiereinrichtung (2, 2) zum Rückführen und Bereitstellen des Ausgangs der Schätzvorrichtung verwendet werden, um das Abtasttaktsignal mit Doppelperiode einer Symbolperiode für den Abtaster bereitzustellen.

2. Vorrichtung nach Anspruch 1, wobei der Abtaster ein Analog-Digital-Wandler (204) zum Abtasten der lauflängenbegrenzt codierten Daten ist.

3. Vorrichtung nach Anspruch 1 oder 2, wobei die Schätzvorrichtung ein digitales Interpolationsfilter (206) ist und das digitale Interpolationsfilter Folgendes umfasst:
- einen Interpolator (208) zum Interpolieren von Nullen zwischen den abgetasteten Daten; und
- ein Filter (210) mit einer Bandbreite von ¼ T im Bezug auf die Symbolperiode von T, wobei das Filter zum Tiefpassfiltern des Ausgangs von dem Interpolator (208) dient.

4. Vorrichtung nach Anspruch 1, 2 oder 3, des Weiteren umfassend:
- einen Symboldetektor (214), um unter Verwendung eines Maximum-Likelihood-Decodieralgorithmus aus den geschätzten Abtastwerten ein ursprüngliches Signal wiederherzustellen; und
wobei das Analogfilter (202) eine Bandbreite von ¼ T im Bezug auf die Symbolperiode von T aufweist.

5. Vorrichtung nach einem vorhergehenden Anspruch, wobei die Vorrichtung einen Teil eines Digital-Versatile-Disk-(DVD-)Systems bildet.

6. Vorrichtung nach einem vorhergehenden Anspruch, wobei die Vorrichtung einen Teil eines Empfängers zum Empfangen von lauflängenbegrenzt codierten Daten bildet.

7. Verfahren zum Erkennen von lauflängenbegrenzt codierten Daten unter Verwendung einer Vorrichtung, wie sie in Anspruch 1 beschrieben wird, wobei das Verfahren folgende Schritte umfasst:
(a)Abtasten von empfangenen lauflängenbegrenzt codierten Daten nach einem Abtasttaktsignal mit Doppelperiode einer Symbolperiode, um abgetastete Daten bereitzustellen;
(b)Schätzen abgetasteter Werte mit der Symbolperiode mit den abgetasteten Daten unter Verwendung von Abtastinterpolation; und
(c)Rückführen der geschätzten abgetasteten Werte, um das Abtasttaktsignal mit Doppelperiode einer Symbolperiode bereitzustellen.

8. Verfahren nach Anspruch 7, wobei der Schritt (b) die folgenden Unterschritte umfasst:
(b1) Interpolieren von Nullen zwischen den abgetasteten Daten, um interpolierte Daten mit der Wiedergabegeschwindigkeit bereitzustellen; und
(b2) Tiefpassfiltern der interpolierten Daten mit einer Bandbreite von ¼ T im Bezug auf die Symbolperiode von T.

9. Verfahren nach Anspruch 7 oder 8, des Weiteren die folgenden Schritte umfassend:
(c)Tiefpassfiltern der empfangenen lauflängenbegrenzt codierten Daten mit einer Bandbreite von ¼ T im Bezug auf die Symbolperiode von T; und
(d)Wiederherstellen eines ursprünglichen Signals aus den geschätzten Abtastwerten unter Verwendung eines Maximum-Likelihood-Decodieralgorithmus.

## Revendications

1. Dispositif pour détecter des données codées en longueur limitée (RLL) comportant :
un filtre analogique (202) ayant une largeur de bande maximum de 1/2 T par rapport à la période de symbole de T et étant conçu pour soumettre les données RLL reçues à un filtrage passe-bas,
un échantillonneur qui échantillonne les données codées RLL reçues conformément à un signal d'horloge d'échantillonnage, et
un estimateur qui estime des valeurs échantillonnées ayant la période de symbole à l'aide des données échantillonnées en utilisant une interpolation d'échantillons et un synchroniseur de symboles (212) pour renvoyer la sortie de l'estimateur afin de délivrer ledit signal d'horloge d'échantillonnage ayant une période double d'une période de symbole à l'échantillonneur.

2. Dispositif selon la revendication 1, dans lequel l'échantillonneur est un convertisseur analogique-numérique (ADC) (204) pour échantillonner les données codées RLL.

3. Dispositif selon la revendication 1 ou 2, dans lequel l'estimateur est un filtre d'interpolation numérique (206), le filtre d'interpolation numérique comportant :
un interpolateur (208) pour interpoler des 0 entre les données échantillonnées, et
un filtre (210) ayant une largeur de bande de 1/4 T par rapport à la période de symbole de T, le filtre soumettant la sortie de l'interpolateur (208) à un filtrage passe-bas.

4. Dispositif selon la revendication 1, 2 ou 3, comportant en outre :
un détecteur de symbole (214) pour rétablir un signal d'origine en utilisant un algorithme de décodage de vraisemblance maximum à partir des échantillons estimés, et
dans lequel le filtre analogique (202) a une largeur de bande de 1/4 T par rapport à la période de symbole de T.

5. Dispositif selon l'une quelconque des revendications précédentes, dans lequel le dispositif fait partie d'un système de disque numérique polyvalent (DVD).

6. Dispositif selon l'une quelconque des revendications précédentes, dans lequel le dispositif fait partie d'un récepteur destiné à recevoir des données codées RLL.

7. Procédé pour détecter des données codées en longueur limitée (RLL) en utilisant un dispositif tel que décrit dans la revendication 1, le procédé comportant les étapes consistant à :
(a) échantillonner des données codées RLL reçues conformément à un signal d'horloge d'échantillonnage ayant une période double d'une période de symbole pour délivrer des données échantillonnées,
(b) estimer des valeurs échantillonnées ayant la période de symbole à l'aide des données échantillonnées en utilisant une interpolation d'échantillons, et
(c) renvoyer les valeurs échantillonnées estimées pour délivrer le signal d'horloge d'échantillonnage ayant une période double d'une période de symbole.

8. Procédé selon la revendication 7, dans lequel l'étape (b) comporte les sous-étapes consistant à :
(b1) interpoler les 0 entre les données échantillonnées pour délivrer des données interpolées ayant la vitesse de lecture, et
(b2) soumettre à un filtrage passe-bas les données interpolées ayant une largeur de bande de 1/4 T par rapport à la période de symbole de T.

9. Procédé selon la revendication 7 ou 8, comportant en outre les étapes consistant à :
(c) soumettre à un filtrage passe-bas les données codées RLL reçues ayant une largeur de bande de 1/4 T par rapport à la période de symbole, et
(d) rétablir un signal d'origine en utilisant un algorithme de décodage de vraisemblance maximum à partir des échantillons estimés.
